# EUROPÄISCHE PATENTANMELDUNG

(11) **EP 0 739 916 A2**
(43) Veröffentlichungstag der Anmeldung: **30.10.1996**
(21) Anmeldenummer: 96106288.2
(22) Anmeldetag: 22.04.1996
(51) Int. Cl.: C08F 291/00, C08F 2/22, C09D 11/10, C09D 17/00

(54) **Emulgator- und Lösungsmittel-freie multimodale Kunstharz-Systeme**

(30) Priorität: 29.04.1995 DE 19515874
(71) Anmelder: Vianova Resins GmbH, 55252 Mainz-Kastel (DE)
(72) Erfinder: Mergardt, Bernd, Dr., 21629 Neu Wulmstorf (DE); Giencke, Astrid, Dr., 65719 Hofheim (DE); Walz, Gerd, Dr., 65207 Wiesbaden (DE)

(57) **Zusammenfassung**

Emulgator- und Lösungsmittel-freie multimodale Kunstharz-Systeme, die sich als Bestandteil von Bindemitteln für denkbare Druckfarben eignen, enthaltend mindestens ein Aminogruppen-haltiges Polymer A und mindestens ein nichtionisches wasserverdünnbares Polymer B sowie gegebenenfalls ein wasserunlösliches Polymer C in Form von Latexteilchen, herstellbar durch Emulsionspolymerisation von ethylenisch ungesättigten Verbindungen in Gegenwart der Polymere A und B.

## Beschreibung

Die Erfindung betrifft in Gegenwart von Säuren wasserverdünnbare multimodale kationische Kunstharz-Systeme, die frei von niedermolekularen Emulgatoren und Lösungsmitteln sind, Verfahren zu deren Herstellung und deren Verwendung als Reibharze, in Pigmentpasten oder als Bindemittelbestandteile für Drucklacke und Druckfarben.

Ökologisch vorteilhafte Druckfarben auf Wasserbasis, die zur Zeit industriell eingesetzt werden, besitzen den Nachteil, daß damit hergestellte Druckerzeugnisse, im Gegensatz zu konventionell Lösungsmittel-haltigen Systemen, beim heutigen Stand der Technik nicht deinkbar sind. Aus diesem Grund ist es wünschenswert, Bindemittel einzusetzen, die neben einer Verdruckbarkeit unter High-Speed-Bedingungen auch eine akzeptable Wiedergewinnungsqualität der Zellstoffe beim Denken bieten.

Hierzu sind kationische oder nichtionische, wasserverdünnbare Polymere bevorzugt geeignet. So beschreiben DE-A 41 15 731 und DE 42 31 566 Wasserfarbkompositionen mit bevorzugter Deinkbarkeit, bedingt durch die anteilige Verwendung derartiger handelsüblicher Acrylharze.

Kationische Bindemittel sind auch Gegenstand von US-A 4 554 212. Diese kathodisch abscheidbaren Überzugsmassen weisen kationische Polymere in wäßriger Phase auf, die über Polymerisation von ethylenisch ungesättigten Verbindungen in Gegenwart von kationischen Polymeren erzeugt werden. Diese sind jedoch für eine Anwendung im Drucksektor ungeeignet, da mit derartig flexiblen Polymeren weder ausreichende Trocknungsgeschwindigkeiten noch klebfreie Drucke erzielt werden können. Ferner sind diese Systeme auch ökologisch wenig vorteilhaft, da erhebliche Mengen organischer Lösungsmittel enthalten sind.

Nach Protonierung mit Säure wasserverdünnbare Bindemittel sind auch Gegenstand von EP-A 0 622 385 und EP-Anmelde Nr. 94116608.4. Die dort beschriebenen kationischen Polymere sind aber als Bindemittel für Druckfarben hinsichtlich ihrer Benetzungsfähigkeit für Pigmente und ihrer Aufnahmekapazität für weitere unpolare Polymere noch verbesserungsbedürftig.

Der vorliegenden Erfindung lag demnach die Aufgabe zugrunde, in Gegenwart von Säure wasserverdünnbare Kunstharz-Systeme auf Basis von kationischen Polymermischungen bereitzustellen, die neben guter Deinkbarkeit eine verbesserte Benetzungsfähigkeit für Pigmente und eine erhöhte Aufnahmekapazität für weitere unpolare Polymere aufweisen.

Die Aufgabe wird erfindungsgemäß dadurch gelöst, daß eine zumindest bimodale Kunstharzmischung erzeugt wird aus einem Aminogruppen-haltigen Polymer A und einem nichtionischen, wasserverdünnbaren Polymer B, aus der nach Eintrag in mit Neutralisationsmittel versehenem Wasser eine Harzlösung hergestellt werden kann, in der durch Zusatz von unpolaren Monomeren ein Polymer C in Form von Latexteilchen erzeugt werden kann.

Unter dem Begriff kationische Polymere A werden im folgenden Aminogruppenhaltige Polymere verstanden, deren Aminogruppen durch Quaternierungsmittel oder durch Neutralisation mit Säure zumindest teilweise in kationische Gruppen überführt werden können. Unter dem Begriff nichtionische, wasserverdünnbare Polymere B werden im folgenden Polymere verstanden, die eine nichtionische hydrophile Teilstruktur enthalten.

Gegenstand der Erfindung sind Emulgator- und Lösungsmittel-freie multimodale Kunstharz-Systeme, enthaltend mindestens ein Aminogruppen-haltiges Polymer A und mindestens ein nichtionisches wasserverdünnbares Polymer B sowie gegebenenfalls ein wasserunlösliches Polymer C in Form von Latexteilchen, herstellbar durch Emulsionspolymerisation von ethylenisch ungesättigten Verbindungen in Gegenwart der Polymere A und B.

Das mittlere Molekulargewicht (Gewichtsmittel) des Aminogruppen-haltigen Polymers A liegt vorzugsweise im Bereich zwischen 3.000 und 50.000, insbesondere von 4.000 bis 25.000, besonders bevorzugt von 6.000 bis 10.000.

Das mittlere Molekulargewicht (Gewichtsmittel) des Polymers B liegt vorzugsweise im Bereich von 400 bis 5.000, insbesondere von 1.000 bis 4.000.

Die erfindungsgemäßen Kunstharz-Systeme enthalten die Polymere A und B vorzugsweise in einem Gewichtsverhältnis von 95 : 5 bis 5 : 95, vorzugsweise 85 : 15 bis 15 : 85, insbesondere von 75 : 25 bis 25 : 75.

Die Glasübergangstemperatur der Harzmischungen beträgt vorzugsweise mindestens 25 °C, vorzugsweise mindestens 45 °C, besonders bevorzugt mindestens 65 °C.

Die erfindungsgemäßen Polymere A sind vorzugsweise Umsetzungsprodukte aus mindestens jeweils einer Verbindung aus den Gruppen (a) Epoxide, Carbonate oder Epoxid-Carbonate, (b) Amine und (c) Phenole, insbesondere von Epoxidgruppen-haltigen Harzen (a1) mit vorzugsweise endständigen Epoxidgruppen und/oder Carbonatgruppen-haltigen Harzen (a2) mit vorzugsweise endständigen Carbonatgruppen aus den Gruppen Polyglycidylether, Polyglycidylester und Polyglycidylamine mit gegebenfalls mehrwertigen Phenolen (c) und/oder Alkoholen und mit gesättigten und/oder ungesättigten sekundären und/oder primären Aminen (b) oder Aminoalkoholen. Letztere können am Alkylrest durch mindestens eine primäre und/oder sekundäre Hydroxylgruppe, durch eine Dialkylaminogruppe und/oder durch eine primäre Aminogruppe, die durch Ketiminbildung vorübergehend geschützt wird, modifiziert sein.

Die eingesetzten Epoxidverbindungen a1 besitzen im Mittel mindestens eine, vorzugsweise zwei 1,2-Epoxidgruppen pro Molekül. Sie können sowohl gesättigt als auch ungesättigt sowie aliphatisch, cycloaliphatisch, aromatisch und heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl-, Arylsubstituenten, Alkyl/Arylsubstituenten, Ethergruppierungen oder ähnliche. Derartige Epoxidverbindungen a1 sind beispielsweise Glycidylether von mehrwertigen Phenolen, beispielsweise Resorcin, Hydrochinon, 4,4'-Dihydroxydiphenylmethan, Isomerengemischen des Dihydroxydiphenylmethans (Bisphenol F), 4,4'-Dihydroxy-3,3'-dimethyldiphenylmethan, 4,4'-Dihydroxydiphenyldimethylmethan (BisphenolA),4,4'-Dihydroxydiphenylmethan,4,4'-Dihydroxydiphenylcyclohexan, 4,4'-Dihydroxy-3,3'-dimethyldiphenylpropan, 4,4'-Dihydroxydiphenyl, 4,4'-Dihydroxydiphenylsulfon,Tris(4-hydroxyphenyl)-methan,4,4'-Dihydroxybenzophenon, Bis(4-hydroxyphenyl)-1,1-isobutan, Bis(4-hydroxy-tert.-butyl-phenyl)-2,2-propan, Bis(2-hydroxynaphthyl)methan, 1,5-Dihydroxynapthalin, Bis(4-hydroxyphenyl)-ether oder den Hydrierungs-, Chlorierungs- und Bromierungsprodukten der vorstehend genannten Verbindungen, sowie Novolaken. Auch anteilige Verwendung von Glycidylethern mehrwertiger Alkohole sind als Verbindungen a1 geeignet. Als Beispiele derartiger mehrwertiger Alkohole seien Ethylenglykol, Diethylenglykol, Triethylenglykol, 1,2-Propylenglykol, 1,4-Propylenglykol, 1,5-Pentandiol, 1,2,6-Hexantriol, Glycerin, Trimethylolpropan und Bis(4-hydroxycyclohexyl)-2,2-propan genannt.

Unter Glycidylether im Rahmen dieser Erfindung werden vorzugsweise solche Glycidylether der allgemeinen Formel I 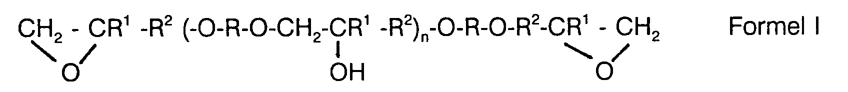 mit R = 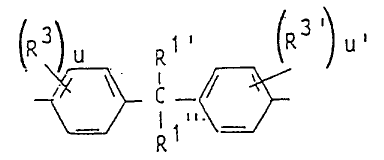
- R¹, R^{1'}, R^{1''} =: unabhängig voneinander H oder CₘH₂ₘ₊₁,
- R² =: linearer oder verzweigter gesättigter Kohlenwasserstoffrest mit bis zu 8 Kohlenstoffatomen, vorzugsweise -CH₂-,
- R³, R^{3'} =: jeweils unabhängig voneinander Halogen, Aryl, Alkyl, Aralkyl,
- n =: 0 bis 8, bevorzugt 1 bis 6,
- m =: 1 bis 8, bevorzugt 1,
- u, u' =: unabhängig voneinander 0 bis 4, vorzugsweise 0 oder 1 verstanden.

Diese Polyglycidylether besitzen eine mittlere Molmasse (Mn) von etwa 200 bis 10.000 und ein Epoxid-Äquivalentgewicht von etwa 120 bis 5.000. Solche Harze sind Umsetzungsprodukte von Epichlorhydrin oder Methylepichlorhydrin mit Dihydroxydiphenylmethan (Bisphenol F) oder Dihydroxydiphenylpropan (Bisphenol A), sowie mit Dihydroxybenzophenon oder Dihydroxynaphthalin. Polyepoxide mit geeignetem Molekulargewicht werden entweder durch Auswahl der Molverhältnisse von Bisphenol und Epichlorhydrin oder durch Reaktion der monomeren Diglycidylverbindungen mit weiterem Bisphenol gegebenenfalls unter Zusatz von Katalysatoren wie Lewis-Säuren oder Phosphoniumsalzen hergestellt. Die Epoxidharze können vollständig oder teilweise hydriert sein oder in Gemischen mit unterschiedlicher Struktur und Molmasse eingesetzt werden.

Weiterhin kann ein Teil des beschriebenen Polyglycidylethers durch aliphatische Polyglycidylether der Formel II 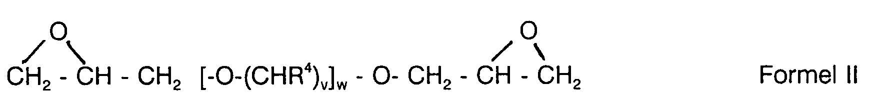 mit
- R⁴ =: H oder einem gegebenenfalls substituierten (C₁-C₄)-Alkylrest,
- v =: 2 bis 6 und
- w =: 2 bis 100, vorzugsweise 3 bis 50,
ersetzt werden. Beispiele sind Bisglycidylether aus Polypropylenglykol oder Polybutylenglykol mit verschiedenem Molekulargewicht. Die Epoxidharze können auch durch Reaktion mit langkettigen Polyalkoholen wie Hexandiol-1,6, Neopentylglykol, Bisethoxyliertes Neopentylglykol, Hydroxypivalinsäureneopentylglykolester und Bis(hydroxymethyl)cyclohexan, Monoanhydropentaerythrit sowie Polytetrahydrofurandiol, Polycaprolactondiol, Polycaprolactamdiol oder Polybutadiendiol in Gegenwart von geeigneten basischen oder sauren Katalysatoren wie Borfluorid-Amin-Komplexen modifiziert werden. Während Polyalkohole mit primären Hydroxylgruppen sich bei geeigneter Katalyse direkt mit Polyglycidylethern umsetzen lassen, können sekundäre Hydroxylgruppen zunächst mit Diisocyanat umgesetzt werden. Das erhaltene Isocyanat-terminierte Reaktionsprodukt kann dann ohne Schwierigkeiten als Brücke zwischen zwei Polyglycidylether-Einheiten unter Vergrößerung des Molekulargewichts und der Funktionalität eingebaut werden.

Weiter kommen als Epoxidverbindungen (Poly)glycidylester der Formel III 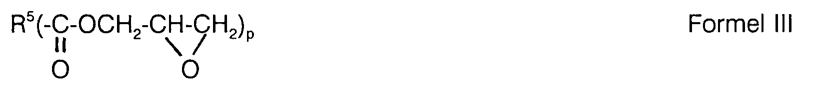 in Frage mit
- R⁵ =: linearer oder verzweigter, gesättigter oder ungesättigter Kohlenwasserstoffrest mit bis zu 40, vorzugsweise bis zu 10 Kohlenstoffatomen oder ein gegebenenfalls substituierter Phenylrest und
- p =: 1 bis 5, vorzugsweise 2 oder 3, insbesondere 2.

Solche Polyglycidylester von Polycarbonsäuren erhält man durch die Umsetzung von Epichlorhydrin oder ähnlichen Epoxyverbindungen mit einer aliphatischen, cycloaliphatischen oder aromatischen Polycarbonsäure, wie Oxalsäure, Adipinsäure, Glutarsäure, Terephthalsäure, Hexahydrophthalsäure, 2,6-Naphthalindicarbonsäure und dimerisierte Fettsäuren. Beispiele hierfür sind Terephthalsäurediglycidylester und Hexahydrophthalsäurediglycidylester.

Als Epoxidgruppen enthaltende Harze a1 kommen auch Verbindungen in Frage, deren Epoxidgruppen teilweise mit Aminen umgesetzt sind. Solche Amino-Epoxidharze können zum Senken der Aminzahl auch mit gesättigten oder ungesättigten Polycarbonsäuren und/oder Hydroxyalkylcarbonsäuren weiter modifiziert sein. Aliphatische, cycloaliphatische und/oder aromatische Polycarbonsäuren verschiedener Kettenlänge sind beispielsweise Adipinsäure, Sebacinsäure, Fumarsäure und Maleinsäure sowie deren Anhydride, Isophthalsäure und dimere Fettsäure. Als Hydroxyalkylcarbonsäuren werden Milchsäure, Dimethylolpropionsäure oder auch Carboxyl- und Hydroxylgruppen-haltige Polyester verstanden. Bei der Umsetzung von überschüssigem Polyglycidylether mit niedrigem Molekulargewicht mit Polycarbonsäuren und/oder Polyalkoholen werden als Zwischenstufe modifizierte Polyglycidylether erhalten, die dann weiter mit Aminen und/oder Aminoalkoholen reagieren können.

Es können auch heterocyclische Polyepoxidverbindungen verwendet werden, wie 1,3-Diglycidyl-5,5-dimethylhydantoin, Triglycidylisocyanurat oder Diepoxide aus Bisimiden. Eine andere geeignete Klasse von Polyepoxiden sind Polyglycidylether von phenolischen Novolakharzen, mit denen die Funktionalität von 2 bis auf etwa 6 Glycidylgruppen pro Molekül gesteigert werden kann. Durch Defunktionalisieren mit langkettigen Alkylphenolen wie Dodecylphenol können zusätzliche Teilstrukturen eingebaut werden.

Weitere geeignete Epoxidverbindungen sind in dem Handbuch "Epoxidverbindungen und Epoxidharze" von A.M. Paquin, Springer Verlag, Berlin 1958, Kapitel IV, in Lee, Neville "Handbook of Epoxy Resins", 1967, Kapitel 2 und in Wagner/Sarx, "Lackkunstharze", Carl Hanser Verlag (1971), S. 174 ff. beschrieben.

Als Carbonate a2 können beliebige Materialien eingesetzt werden, sofern sie mindestens eine, vorzugsweise zwei oder drei 2-Oxo-1,3-dioxolangruppen (cyclische Carbonatgruppen) pro Molekül enthalten und keine anderen funktionellen Gruppen aufweisen, die die Reaktion mit der Komponente b stören. Das Molgewicht Mn (Zahlenmittel, bestimmt mittels Gelchromatographie mit Polystyrolen als Standard), sollte im allgemeinen zwischen 100 und 10 000, vorzugsweise zwischen 150 und 5000 liegen und das 2-Oxo-1,3-dioxolan-Äquivalentgewicht zwischen 100 und 1500. Die cyclischen Carbonatgruppen sind vorzugsweise endständig, jedoch können auch Verbindungen als Komponente a2 eingesetzt werden, die diese Gruppen in statistischer Verteilung über die Molekülkette enthalten und die durch Copolymerisation unter Verwendung von olefinisch ungesättigten, diese cyclischen Carbonat-Gruppen enthaltenden Verbindungen hergestellt werden können. Ein derartiges Herstellungsverfahren ist beispielsweise in DE-A 3 644 373 beschrieben.

Vorzugsweise besitzt die Carbonat-Komponente a2 die allgemeine Formel IV 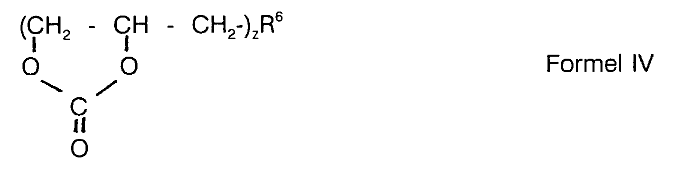 mit
- R⁶ =: z-wertiger Rest eines Phenols, Polyethers, Polyetherpolyols, Polyesters, Polyesterpolyols, der gegebenenfalls auch Amino- oder Alkylamino-Gruppen enthalten kann, oder
z-wertiger Kohlenwasserstoffrest, vorzugsweise Alkylenrest mit 2 bis 18 Kohlenstoffatomen, der gegebenenfalls inerte Gruppen tragen kann, oder
z-wertiger Poly(sek.)aminrest oder
z-wertiger Rest eines Umsetzungsproduktes einer Epoxy-Carbonat-Verbindung mit Polyaminen, Polyolen, Polycaprolactonpolyolen, Hydroxylgruppen-haltigen Polyestern, Polyethern, Polyglykolen, Hydroxy-, Carboxy- und Amino-funktionellen Polymerölen mit mittleren Molekulargewichten von 800 bis 10 000, Polycarbonsäuren, Hydroxy- oder Amino-funktionellen Polytetrahydrofuranen und Reaktionsprodukten von Polyaminen mit Glycidylestern von α,α-Dialkylalkanmonocarbonsäuren der Summenformel C₁₂H₂₂O₃ bis C₁₄H₂₆O₃, beispielsweise der Versaticsäure (Shell Chemie, α-verzweigte Monocarbonsäure mit 9 bis 12 Kohlenstoffatomen),
- z =: 1 bis 5, vorzugsweise 2 oder 3, insbesondere 2.

Derartige Verbindungen und deren Herstellung sind beispielsweise in DE-A 37 26 497 beschrieben.

In manchen Fällen kann es zweckmäßig sein, als Komponente a zusätzlich oder gegebenenfalls ausschließlich gemischte Epoxid-Carbonate der allgemeinen Formel V 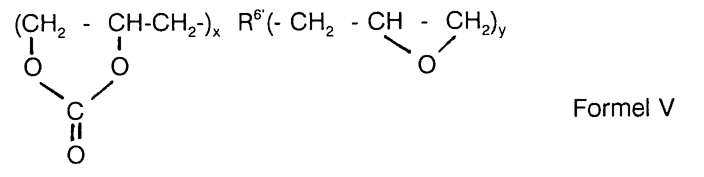
- mit R^{6'} =: (x+y)-wertiger Rest eines Phenols, Polyethers, Polyetherpolyols, Polyesters, Polyesterpolyols, der gegebenenfalls auch Amino- oder Alkylamino-Gruppen enthalten kann, oder (x+y)-wertiger Kohlenwasserstoffrest, vorzugsweise Alkylenrest mit 2 bis 18 Kohlenstoffatomen, der gegebenenfalls inerte Gruppen tragen kann, oder
(x+y)-wertiger Poly(sek.)aminrest oder
(x+y)-wertiger Rest eines Umsetzungsproduktes einer Epoxy-Carbonat-Verbindung mit Polyaminen, Polyolen, Polycaprolactonpolyolen, Hydroxylgruppen-haltigen Polyestern, Polyethern, Polyglykolen, Hydroxy-, Carboxy- und Aminofunktionellen Polymerölen mit mittleren Molekulargewichten von 800 bis 10 000, Polycarbonsäuren, Hydroxy- oder Amino-funktionellen Polytetrahydrofuranen und Reaktionsprodukten von Polyaminen mit Glycidylestern von α,α-Dialkylalkanmonocarbonsäuren der Summenformel C₁₂H₂₂O₃ bis C₁₄H₂₆O₃, beispielsweise der Versaticsäure,
- x, y =: unabhängig voneinander 1 bis 5, vorzugsweise 2 oder 3, insbesondere 1.
zu verwenden.

Bevorzugte Ausgangsstoffe zur Herstellung der cyclischen Carbonate und der gegebenenfalls eingesetzten gemischten Epoxy-Carbonat-Verbindungen sind die Polyglycidylether von mehrwertigen Phenolen und Alkoholen, beispielsweise Bisphenol A oder Bisphenol F. Die Glycidylether erhält man beispielsweise durch Umsetzung eines Polyphenols mit Epichlorhydrin. Polyphenole sind beispielsweise Bis(4-hydroxyphenyl)-2,2-propan, Bis(4-hydroxyphenyl)methan, 4,4'-Dihydroxybenzophenon, Bis(4-hydroxyphenyl)ether, Bis(4-hydroxyphenyl)-1,1-isobutan, Bis(2-hydroxynaphthyl)methan, 1,5-Dihydroxynaphthalin. Vorzugsweise sind zusätzlich freie Hydroxylgruppen zu den Epoxydgruppen im Polyglycidylether des Polyphenols enthalten. Auch Diglycidyladdukte von cyclischen Harnstoffen sind einsetzbar.

Als Amine (b) können primäre Monoamine verwendet werden, vorzugsweise mit Alkyl- und Alkanolgruppen, beispielsweise Methylamin, Ethylamin, Propylamin, iso-Propylamin, Butylamin, iso-Butylamin, 2-Aminobutan, 4-Aminobutanol-2, Isoamylamin, Pentylamin, 3-Methylbutylamin, Heptylamin, Octylamin, 2-Ethylhexylamin, Isononylamin, Isotridecylamin, 2-Aminomethyl-1-propanol, Monoethanolamin, Mono(n- oder iso)propanolamin, Neopentanolamin, Methoxypropylamin, 2-(2-Aminoethoxy)ethanol, Kokosfettamin, Oleylamin, Stearylamin, Talgfettamin, Decylamin, Dodecylamin, Tetradecylamin, Hexadecylamin, Octadecylamin, Cyclopentylamin, Cyclohexylamin, 3-Methoxypropylamin, 3-Ethoxypropylamin, 3-Butoxypropylamin, 3-Isononyloxypropylamin, 3-Aminopropyltrimethoxy(ethoxytridecyloxy)silan, 2-Amino-2-hydroxy-methyl-1,3-propandiol. Es können auch sekundäre Monoamine verwendet werden, vorzugsweise Dialkylamine, Monoalkylhydroxyalkylamine oder Dihydroxyalkylamine. Beispiele für solche Verbindungen sind Dimethylamin, Diethylamin, Dipropylamin, Di(n- oder iso-)propylamin, Dibutylamin, Diisobutylamin, Di-sek.-butylamin, N-Methylbutylamin, N-Methylaminoethanol, Diethanolamin, Dipentylamin, Dioctylamin, Di(2-ethylhexyl)amin, Diisononylamin, N-Ethylbutylamin, N-Ethylcyclohexylamin, Dicyclohexylamin, Distearylamin, Dikokosamin, Ditalgfettamin oder auch cyclische Amine, wie Morpholin, Pyrrolidin oder Oxazolidin oder gegebenenfalls substituiertes Anilin. Ebenso können Umsetzungsprodukte von primären Monoaminen mit Monoepoxiden als Substitut für die sekundäre Amine eingesetzt werden.

Weiterhin können primäre Amine der allgemeinen Formel VI

H₂N-CR⁷R⁸-R⁹-O-(CHR¹⁰-CHR¹¹O-)_{q}R¹² Formel VI

eingesetzt werden mit
- R⁷ und R⁸ =: Wasserstoff, ein Alkylrest oder eine Hydroxylgruppe,
- R⁹ =: linearer oder verzweigter Alkylrest, insbesondere ein Alkylrest mit 1 bis 3 Kohlenstoffatomen,
- R¹⁰ und R¹¹ =: Wasserstoff oder ein Alkylrest mit 1 bis 4 Kohlenstoffatomen,
- R¹² =: Wasserstoff, ein Alkyl-, Cycloalkyl- oder Phenylrest, vorzugsweise ein Alkylrest mit 1 bis 6 Kohlenstoffatomen und
- q =: 0 bis 5.

Als Beispiele für einsetzbare Verbindungen dieses Typs seien genannt Ethanolamin, Propanolamin, Butanolamin, Ethylenglykol(2-aminoethyl)ether und Diethylenglykolmono(3-aminopropyl)ether. Beim Einsatz der primären Amine kann das Amin mit der Epoxidgruppe in Abhängigkeit von den angebotenen stöchiometrischen Verhältnissen unter Molekülvergrößerung reagieren. Als Beispiele für Diamine seien genannt ®Jeffamin M-Serie, ®Jeffamin D-Serie, ®Jeffamin ED-Serie (Texaco). Weiterhin kommen Di- oder Triamine mit primären und/oder sekundären Aminogruppen in Frage, beispielsweise Laurylpropylendiamin, Talgfettpropylendiamin.

Als Polyamine (b) werden Verbindungen verstanden, die mindestens zwei Aminogruppen im Molekül enthalten. Allgemein besitzen diese Verbindungen 2 bis 50, vorzugsweise 2 bis 20 Kohlenstoffatome.

Als Polyamine (b) sind beispielsweise solche geeignet, die nur primäre Aminogruppen enthalten und vorzugsweise diprimär sind. Diese Polyamine werden vorzugsweise in Abmischung mit primär/tertiären Diaminen, eingesetzt.

Als Polyamine (b) sind beispielsweise auch solche geeignet, die nur sekundäre Aminogruppen enthalten und vorzugsweise disekundär sind. Bevorzugt werden langkettige Diamine, beispielsweise N,N'-Dialkyldiaminoalkane oder Umsetzungsprodukte von Monoepoxiden, beispielsweise gesättigten Glycidylethern oder -estern, oder Epoxyalkanen mit primären Diaminoalkanen, beispielsweise dem Additionsprodukt von Hexandiamin-1,6 mit 2 Mol Glycidylester der Versaticsäure. Als Monoepoxide können für diesen Zweck auch gesättigte oder ungesättigte Glycidylether oder α-Epoxide verschiedener Kettenlänge wie 1,2-Epoxydodecan oder Butylenoxid eingesetzt werden.

Als Polyamine (b) kommen auch solche Polyamine in Frage die mindestens eine freie primäre Aminogruppe enthalten und daneben noch zusätzlich sekundäre und/oder tertiäre Aminogruppen aufweisen.

Die Polyamine (b) können beispielsweise durch die nachstehende Formel VII wiedergegeben werden. 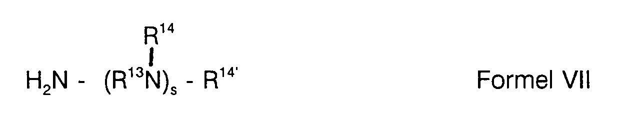 mit
- s =: Null oder eine ganze Zahl von 1 bis 6, vorzugsweise 1 bis 4,
- R¹³ =: ein zweiwertiger, vorzugsweise nichtaromatischer Kohlenwasserstoffrest mit 2 bis 18 C-Atomen, vorzugsweise ein verzweigter oder unverzweigter Alkylenrest mit 2 bis 10 C-Atomen, insbesondere mit 2 bis 6 Kohlenstoffatomen, oder ein Cycloalkylenrest mit 5 bis 12 Kohlenstoffatomen, vorzugsweise 6 bis 10 Kohlenstoffatomen, oder ein Aralkylenrest mit 7 bis 12 Kohlenstoffatomen, vorzugsweise 8 bis 10 Kohlenstoffatomen, oder einen Polyoxalkylenrest mit 2 bis 18 Kohlenstoffatomen,
- R¹⁴, R^{14'} =: unabhängig voneinander H oder 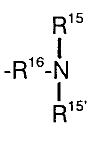
- R¹⁵, R^{15'} =: unabhängig voneinander H,
(C₁-C₂₀)-Alkyl, vorzugsweise (C₁-C₆)-Alkyl, (C₁-C₁₆)-Hydroxyalkyl, vorzugsweise 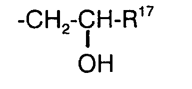
- R¹⁶ =: unabhängig von R¹³ die für R¹³ angegebene Bedeutung,
- R¹⁷ =: (C₁-C₁₂)-Alkyl, -CH₂-O-(C₁-C₁₂)-Alkyl, -CH₂-O-Aryl, 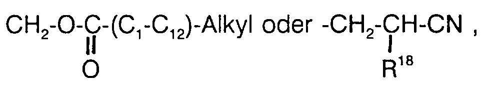
- R¹⁸ =: H oder (C₁-C₆)-Alkyl oder
- R¹⁵ und R¹⁶ =: Teil eines 5-, 6- oder 7-gliedrigen aliphatischen Ringes mit der Maßgabe, daß für s gleich Null R^{14'} nicht gleich H ist.

Weiterhin sind hier auch als Polyamine solche der Formel VIII.

X-(R¹⁹NH)ₜ-R²⁰-Y Formel VIII

geeignet, worin X, Y = NH₂ oder OH ist, jedoch nicht die gleiche Bedeutung haben, und R¹⁹, R²⁰ unabhängig voneinander die Bedeutung von R¹³ in der voranstehenden Formel VII haben und t die Bedeutung von s in der voranstehenden Formel VII hat.

Daneben sind beispielsweise auch die Polyamine und Polyaminopolyole geeignet, die in den Patentanmeldungen DE-A 36 44 371, DE-A 37 26 497 und DE-A 38 09 695 beschrieben sind. Auf diese Literaturstellen einschließlich der darin beschriebenen bevorzugten Ausführungsformen wird hiermit Bezug genommen. Weiterhin kommen auch Polyaminoamide oder Kondensationsprodukte von diprimären Aminen mit Dicarbonsäuren, beispielsweise Adipinsäure oder dimere Fettsäuren, sowie Polyglykolpolyamine oder Aminaddukte, beispielsweise Amin-Epoxidharz-Addukte, in Betracht.

Beispiele für geeignete Polyamine (b) sind Ethylendiamin, Propylendiamin, 2-Methylpentamethylendiamin, Pentamethylendiamin, Hexamethylendiamin, Tri-methylhexamethylendiamin, Neopentyldiamin, Octamethylendiamin, Triacetondiamin, Dioxadecandiamin, Dioxadodecandiamin und höhere Homologe, cycloaliphatische Diamine wie 1,2-, 1,3- oder 1,4-Cyclohexandiamin sowie Laurylpropylendiamin und Talgfettpropylendiamin, 4,4'-Methylenbiscyclohexylamin, 4,4'-Isopropylenbiscyclohexylamin, Isophorondiamin, Tricyclododecenyldiamin, Menthandiamin, 4,4'-Diamino-3,3'-dimethyldicyclohexylmethan, 3-Aminomethyl-1-(3-aminopropyl-1-methyl)-4-methylcyclohexan, N-Methylethylendiamin, N-Aminoethylpiperazin, 2-Aminoethylpiperazin, N,N-Dimethylethylendiamin, N,N-Dimethylpropylendiamin, N,N-Dimethylaminopropylamin, N,N-Bisaminopropyl-N,N'-dimethylaminopropylamin, N,N-Dihydroxyethylendiamin, aromatische Amine wie m-Xylylendiamin, aliphatische Poly(tri-, tetra-)amine wie Diethylentriamin, Dipropylentriamin, Bishexamethylentriamin, Triethylentetramin, Tetraethylenpentamin, Pentaethylenhexamin, Methyliminobispropylamin, N-Alkylaminodipropylentriamine (Alkyl = CH₃-, C₄H₉-, (CH₃)₂N(CH₂)₃-), Tetrapropylenpentamin, ferner Alkanolamine wie Aminoethylethanolamin, N-(2-Hydroxypropyl)ethylendiamin, Ethylenglykolbispropylamin,Hydroxyethylaminoethylamin,Hydroxyethyldiethylentriamin, Polyoxypropylendiamin, vorzugsweise mit mittlerem Molgewicht von ca. 200 bis 400. Bevorzugte Polyamine sind N,N-Bisaminopropyl-N-methylamin, N-Aminopropylmethylamin, N-Aminopropylpropylamin, Talgfettpropylendiamin und insbesondere Dimethylaminopropylamin sowie Diethylaminopropylamin und N-Cyclohexyl-1,3-propylendiamin, 3-Dimethylaminopropylamin, 2-Diethylaminoethylamin, Dimethylaminoneopentylamin.

Als Phenole (c), die einzeln oder im Gemisch Verwendung finden können, seien genannt Phenol, m-Kresol, 3,5-Dimethylphenol, m-Ethoxyphenol, p-Oxybenzylphenol, o-Oxybenzylphenol. Vorzugsweise werden Phenole (c) eingesetzt, die mindestens zwei phenolische Hydroxyfunktionen enthalten, beispielsweise Resorcin, Hydrochinon, 4,4'-Dihydroxydiphenylmethan, Isomerengemischen des Dihydroxydiphenylmethans (Bisphenol F), 4,4'-Dihydroxy-3,3'-dimethyldiphenylmethan, 4,4'-Dihydroxydiphenyldimethylmethan (Bisphenol A), 4,4'-Dihydroxydiphenylmethan, 4,4'-Dihydroxydiphenylcyclohexan, 4,4'-Dihydroxy-3,3'-dimethyldiphenylpropan, 1,2-, 1,3-, 1,5-, 1,6-, 2,2'- und 4,4'-Dihydroxydiphenyl, 4,4'-, 2,5'- und 3,3'-Dihydroxy-2,2'-bipyridyl, 4,4'-Dihydroxydiphenylsulfon, 4,4'-Bis-(4-hydroxyphenyl)valeriansäure und deren Amid, Bis(4-hydroxyphenyl)sulfid, 2,2-Bis-(4-hydroxyphenyl)essigsäure und deren Amid, Tris(4-hydroxyphenyl)methan, 4,4'-Dihydroxybenzophenon, Bis(4-hydroxyphenyl)-1,1-isobutan, Bis(4-hydroxytert.-butylphenyl)-2,2-propan,Bis(2-hydroxynaphthyl)methan,1,5-Dihydroxynaphthalin, Bis(4-hydroxyphenyl)ether oder den Hydrierungs-, Chlorierungs- und Bromierungsprodukten der vorstehend genannten Verbindungen, sowie Novolake. Besonders bevorzugt sind Resorcin, Bisphenol A und Bisphenol F.

Als Phenole (c) finden insbesondere alkylierte, arylierte oder alkarylierte, gegebenenfalls isomerisierte, ein- und/oder mehrwertige Phenole Verwendung. Als Alkylierung, Arylierung oder Aralkylierung wird hierbei die elektrophile Substitutionen an aromatischen Kernen von Phenolgrundkörper mit ungesättigten Verbindungen verstanden. Die Phenole c werden insbesondere charakterisiert durch die Formeln IX 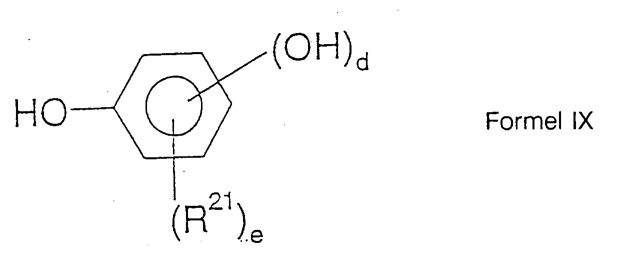 mit
- R²¹ =: (C₂-C₁₈-), vorzugsweise (C₂-C₄)-Alkyl, (C₅-C₆)-Cycloalkyl, Phenyl, mit zumindest einem (C₁-C₁₈)-Alkylrest substituiertes Phenyl, mit zumindest einem Phenylrest substituiertes (C₂-C₁₈)-Alkyl,
- d =: eine Zahl von 0 bis 4, vorzugsweise 1 oder 2, und
- e =: eine Zahl von 1 bis 5, wobei der Wert für e kleiner oder gleich der Differenz 5 von minus d ist,
oder Formel X 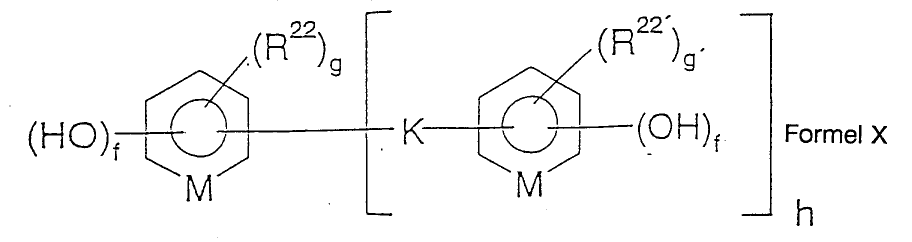
mit
- f =: 1 oder 2,
- g =: 1 bis 4,
- g' =: 0 bis 4,
- h =: 1 oder 2,
- M =: = CH- oder ein Heteroatom, vorzugsweise ein Stickstoffatom,
- R²² =: die gleiche Bedeutung wie R²¹,
- R^{22'} =: H oder die gleiche Bedeutung wie R²¹,
- K =: eine Einfachbindung, CH₂, C(CH₃)₂, S(O), S, S-S, C(O) oder eine Gruppe der Formel XI 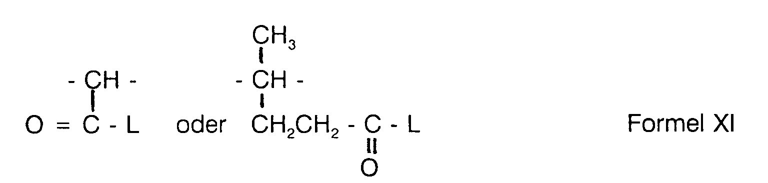
- L =: eine Hydroxylgruppe, 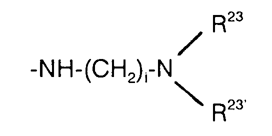 oder eine Gruppe der Formel XII 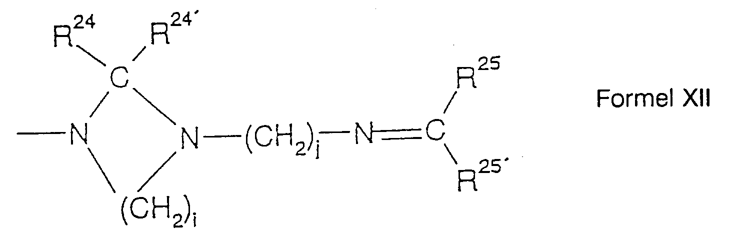
mit
- R²³, R²⁴, R²⁵, R^{23'}, R^{24'}, R^{25'} =: unabhängig voneinander Wasserstoff oder (C₁-C₄)-Alkyl,
- i, j =: unabhängig voneinander 1 bis 4, vorzugsweise 2 oder 3.

Zur Herstellung der erfindungsgemäß bevorzugt einzusetzenden, alkylierten, arylierten oder alkarylierten Phenole (c) können als phenolische Grundkörper ein-oder mehrkernige Phenole, beispielsweise Phenol, vorzugsweise solche, die mehrere Hydroxylgruppen am selben aromatischen Ring tragen, beispielsweise Phloroglucin, Pyrogallol, Hydrochinon, Brenzkatechin, insbesondere Resorcin, verwendet werden.

Als Phenolgrundkörper eignen sich auch Phenole auf Basis kondensierter aromatischer Ringsysteme. Letztere werden beispielsweise beschrieben durch die Formel XIII. 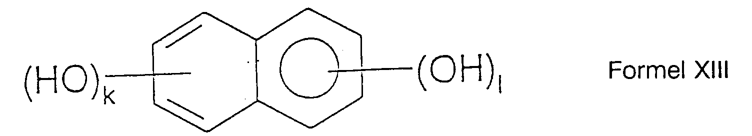 oder Formel XIV 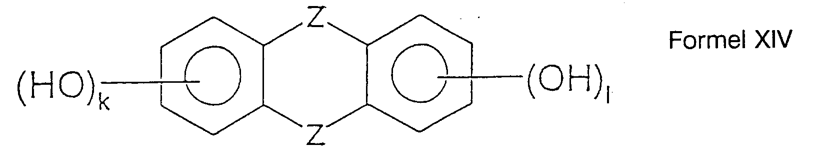 mit
k = 0 bis 2,
l = 1 bis 3, vorzugsweise 1 oder 2,
   wobei die Summe von k und l mindestens 2 beträgt, und
Z = =CH-, >C=O, ein Sauerstoffatom oder ein Stickstoffatom.

Beispielhaft seien genannt 1,4-Dihydroxynaphthalin und dessen Stellungsisomere, Dihydroxyanthrachinon, Chinizarin, Anthraflavinsäure.

Es können auch Phenole (c) ihrerseits als Phenolgrundkörper zur Herstellung weiterer Verbindungen c dienen.

Die als Phenole (c) bevorzugt einzusetzenden Mono(alkylaryl)phenole sind an sich bekannte Verbindungen, die häufig in der Literatur auch als styrolisierte Phenole bezeichnet werden. Gemäß den Ausführungen in der Österreichischen Patentschrift AT-C 284 444 sind die Reaktionen von Styrolen mit Phenolen bekannt und stellen im wesentlichen Alkylierungsreaktionen dar, bei denen sich die Vinylgruppe der Styrole in ortho- oder para-Stellung zur Hydroxylrguppe des Phenols addiert. Bei dieser Reaktion werden im allgemeinen Friedel-Crafts-Katalysatoren, beispielsweise Säuren und Lewis-Säuren, verwendet. In Abhängigkeit von den Reaktionsbedingungen, Katalysatoren und Mengenverhältnissen der Reaktionsteilnehmer erhält man dabei mono-, di- oder tri-styrolisierte Phenole. Auch aus der Deutschen Offenlegungsschrift DE-A 19 40 220 sind Arylalkylphenolprodukte und Verfahren zur Herstellung derselben bekannt.

Die bevorzugten Arylalkylphenole (c) können durch Addition von einer Vinylverbindung an Phenole bei einem molaren Verhältnis der phenolischen Hydroxylgruppen im Phenol zur aromatischen Vinylverbindung von 1:1 bis 1:2 in Anwesenheit von Mineralsäure oder Friedel-Crafts-Katalysatoren in bekannter Weise hergestellt werden.

Als Vinylverbindungen können natürliche oder synthetische Verbindungen mit einer oder mehreren Kohlenstoff-Kohlenstoff-Doppelbindungen, im letzteren Fall auch konjugierte Doppelbindungen, verwendet werden. Als natürliche ungesättigte Verbindungen können ungesättigte Fettsäuren, die daraus abgeleiteten fetten Öle, Fettsäureamide oder Fettalkohole verwendet werden. Geeignete Ausgangsverbindungen sind ferner ungesättigte Naturstoffe auf Terpenbasis, zum Beispiel Terpentinöl, Kolophonium. Als synthetische ungesättigte Kohlenwasserstoffverbindungen können Alkene, Diene oder noch höher ungesättigte Kohlenwasserstoffe verwendet werden, beispielsweise Buten, Isobuten, Isoocten, Isononen, Isododecen, oder zweifach ungesättigte Verbindungen, beispielsweise Butadien, Isopren, Chloropren, Dichlorbutadien, Dicyclopentadien. Es können auch Gemischen von Alkenen und gegebenenfalls von Alkenen mit Alkanen verwendet werden, wie sei beispielsweise bei der Crackung oder Dehydrierung von Kohlenwasserstoffen, beispielsweise Erdöl, oder Oligomerisierung von Olefinen, insbesondere von Isobutylen, Propylen oder n-Buten oder der Kohlenoxidierung entstehen. Geeignet sind auch acetylenisch ungesättigte Verbindungen, beispielsweie Acetylen oder (C₁-C₁₀)-Alkyl- bzw. Di-(C₁-C₁₀)-alkylacetylene.

Es können beispielsweise folgende ungesättigte Verbindungen als Ausgangsstoffe zur Herstellung von Verbindungen c verwendet werden: n-Penten-(l), n-Hexen-(1), n-Octen-(1), n-Nonen-(1), n-Decen-(1), n-Undecen-(1), n-Dodecen-(1), Propylen-(1), n-Buten-(1), vorgenannte Alkene, die in 2-Stellung oder 3-Stellung oder gegebenenfalls 4-Stellung durch die Methyl-, Ethyl-, n-Propyl-, Isopropyl-, n-Butyl-, Isobutyl-, sek.-Butyl,- tert.-Butyl-Gruppe substituiert sind; 2,3-Dimethyl-n-buten, 3,3-Dimethyl-n-buten, 2,5-Dimethylhepten, 3,3-Dimethylhepten, 2,3,4-Trimethylhepten, 2,4-Dimethylhepten, 2,3-Dimethylhepten, 4,4-Dimethylhepten, 2,3-Diethylhexen, 4,4-Dimethylhexen, 2,3-Dimethylhexen, 2,4-Dimethylhexen, 2,5-Dimethylhexen, 3,3-Dimethylhexen, 3,4-Dimethylhexen, 2-Methyl-3-ethylpenten, 3-Methyl-3-ethylpenten, 2,3,3-Trimethylhepten, 2,4,4-Trimethylpenten, 2,3,3-Trimethylpenten, 2,3,4-Trimethylpenten, 2,3,3,4-Tetramethylpenten; analoge Alkene, deren Doppelbindung in 2-Stellung oder in 3-Stellung im Molekül liegen; verzweigte Alkene, wie sie in Gestalt von Gemischen bei der Dimerisierung von Isobutylen oder n-Buten (Octene) oder Trimerisierung von Isobutylen oder n-Buten (Dodecene) oder Propylen (Nonene) bzw. Tetramerisierung von Propylen (Dodecene) anfallen.

Als aromatische Vinylverbindungen werden insbesondere Styrolderivate engesetzt. Als Styrolderivate seien bespielsweise α-Methylstyrol, Styrol, o-Methylstyrol, m-Methylstyrol, p-Methylstyrol, handelsübliches Vinyltoluol (Isomerengemisch), 3,4-Dimethylstyrol, 2,4-Dimethylstyrol, 2,5-Dimethylstyrol, 2,6-Dimethylstyrol, o-Ethylstyrol, m-Ethylstyrol, p-Ethylstyrol, 3,4-Diethylstyrol, 2,4-Diethylstyrol, 2,5-Diethylstyrol, 2,6-Diethylstyrol, o-Propylstyrol, m-Propylstyrol, p-Propylstyrol, o-Isopropylstyrol, m-Isopropylstyrol, p-Isopropylstyrol, o-Butylstyrol, m-Butylstyrol, p-Butylstyrol, o-Isobutylstyrol, m-Isobutylstyrol, p-Isobutylstyrol, sek.-Butylstyrol, m-sek.-Butylstyrol, p-sek.-Butylstyrol, o-tert.-Butylstyrol, m-tert.-Butylstyrol, p-tert.-Butylstyrol, p-Bromstyrol, p-Chlorstyrol, 2,4-Dibromstyrol, 2,4-Dichlorstyrol, 2,4,6-Trichlorstyrol.

Besonders bevorzugt werden als Vinylverbindungen Vinylaromaten der Formel XV 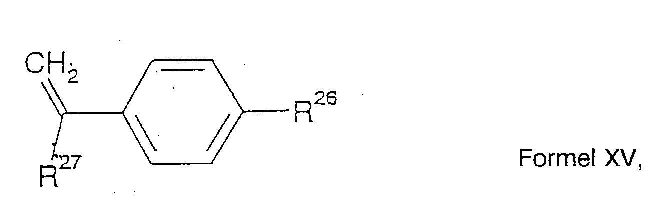 in der R²⁶ ein Wasserstoffatom oder einen Methylrest und R²⁷ ein Wasserstoffatom oder einen Alkylrest mit 1-3 Kohlenstoff-Atomen oder den Rest 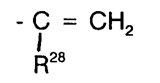 darstellt, in dem R²⁸ unabhängig die gleiche Bedeutung wie R²⁶ haben kann, beispielsweise Styrol und α-Methylstyrol.

Zur Herstellung der Polymere oder Polymergemische A aus den Komponenten a, b und c sind die Molverhältnisse zwischen Epoxid-, cyclischen Carbonat-, Amino- und Phenolgruppen-haltigen Verbindungen so zu wählen, daß der vollständige Einbau der Phenol-, Carbonat- und Epoxidgruppen gewährleistet ist. Dieses Reaktionsfolge kann schrittweise aufbauend auf Verbindungen a erfolgen oder auch so durchgeführt werden, daß beispielsweise Verbindungen b in Abmischung mit Verbindungen c mit den Verbindungen a in Reaktion gebracht werden. Umsetzung wird im allgemeinen so lange vorgenommen, bis eine konstante oder die theoretische Aminzahl erreicht ist. Reaktionen von Verbindungen a, b und c werden dabei in den erforderlichen stöchiometrischen Mengenverhältnissen bei erhöhten Temperaturen, beispielsweise 40 bis 300 °C, vorzugsweise 50 bis 250 °C, besonders bevorzugt zwischen 80 und 200 °C, durchgeführt, wobei gegebenenfalls mit Hilfe von Lösungsmitteln und/oder Katalysatoren gearbeitet werden kann. Es ist darauf zu achten, daß keine Gelierung eintritt. Es können alle Amine gleichzeitig mit den Epoxidgruppen und/oder Carbonatgruppen umgesetzt oder es kann stufenweise vorgegangen werden. Es können so auch Gemische aus verschiedenen Epoxid-Amin-Addukten und/oder Carbonat-Amin-Addukten erhalten werden. Die Reaktion mit den Aminen beginnt schon bei Raumtemperatur und ist im allgemeinen exotherm. Um eine vollständige Umsetzung zu erreichen, ist es in der Regel notwendig, die Temperatur zeitweise auf Werte zwischen 40 und 250 °C zu erhöhen. Während für die Umsetzung primärer Aminogruppen mit den 2-Oxo-1,3-dioxolan-Gruppen im allgemeinen kein Katalysator erforderlich ist, ist eine Katalyse für die Reaktion der reaktionsträgeren sek.- Aminogruppen zweckmäßig. Geeignete Katalysatoren hierfür sind stark basische Verbindungen, wie quartäre Ammoniumverbindungen, beispielsweise Alkyl, Aryl- und/oder Benzylammoniumhydroxide und -carbonate. Spezielle Vertreter für quartäre Ammoniumverbindungen sind hier (C₁₆-C₂₂)-Alkylbenzyldimethylammoniumhydroxyd, Benzyltrimethylammoniumhydroxyd und Tetrabutylammoniumhydroxyd. Bevorzugt sind als Katalysatoren stark basische Amine, beispielsweise Diazabicyclooctan (DABCO), Guanidin. Weiterhin sind hier auch sogenannte supranukleophile Katalysatoren, beispielsweise 4-Pyrrolidinylpyridin, Poly-(N,N-dialkylaminopyridin) geeignet (vgl. hierzu Artikel von R. A. Vaidya et al. in Polymer Preprints, Bd. 2 (1986), S. 101 - 102).

Optional kann zur Herstellung der erfindungsgemäßen Harzsysteme mit Zusatz von Lösungsmitteln gearbeitet werden, die nach Beendigung der Harzsynthesen im Vakuum entfernt werden können, beispielsweise mit Glykolethern wie Ethylenglykolen, Propylenglykolen, Butylenglykolen, beispielsweise Methylglykol, Ethylglykol, Butylglykol, Methyldiglykol, Ethyldiglykol, Butyldiglykol, Methyltriglykol, Ethyltriglykol, Butyltriglykol, Methyltetraglykol, Ethyltetraglykol, Butyltetraglykol, ®Polyglykol-M-250 (Hoechst, MG: 260-275, OH-Zahl: 204-215), ®Polyglykol-M-350 (Hoechst, MG: 335-265, OH-Zahl: 154-167), 2-n-Propoxyethanol, 2-(1-Methylethoxy)ethanol, 2-n-Butoxyethanol, 2-(2-Methoxyethoxy)ethanol, 2-(2-Ethoxyethoxy)ethanol, 2-(2-Butoxyethoxy)ethanol, Triethylenglykolmonomethylether, Tetraethylenglykolmonomethylether, 2,5,8,11-Tetraoxadodecan, 1-Methoxy-2-propanol, 1-Ethoxy-2-propanol, Tripropylenglykolmonomethylether, Propylenglykolmethylether,Dipropylenglykolmethylether,Tripropylenglykolmethylether, Propylenglykol-n-butylether, Dipropylenglykol-n-butylether, Tripropylenglykol-n-butylether und Propylenglykolphenylether.

Die Polymere B enthalten zumindestens eine hydrophile Teilstruktur, die im vorliegenden pH-Wert Bereich nicht-ionisch ist. Beispiele solcher Polymere B sind Addukte von Hydroxyverbindungen an Epoxidgruppen-haltige Harze mit vorzugsweise endständigen Epoxidgruppen aus den Gruppen Polyglycidylether und Polyglycidylester.

Als Epoxidgruppen-haltige Harze werden vorzugsweise Polymere mit endständigen Epoxidgruppen aus den Gruppen Polyglycidylether und Polyglycidylester eingesetzt.

Als Hydroxyverbindungen werden organische Verbindungen einzeln oder in ihren Mischungen eingesetzt, die mindestens eine Hydroxylgruppe enthalten. Bevorzugt werden Mono-, Bis- oder Tris-Hydroxyverbindungen verwendet, besonders bevorzugt Monohydroxyverbindungen.

Unter Monohydroxyverbindungen werden erfindungsgemäß Monoalkohole und monoveretherte Polyalkylenoxidverbindungen verstanden. Als Monoalkohole sind vorzugsweise solche mit Alkan- oder Cycloalkanresten, insbesondere (C₈ bis C₃₂)-Alkohole und deren Isomere, beispielsweise 2-Ethylhexanol, Octanol, Nonanol, Decanol, Dodecanol, ferner Stearyl-, Cetyl-, Ceryl-, Myricylalkohol, ®TCD-Alkohol M (Hoechst, MG: 166, OH-Zahl: 327), Wollwachsalkohole, Cholesterole, Borneole, Isoborneole und Tallölfettalkohole einsetzbar. Optional können zur Modifizierung der Eigenschaften auch (C₁-C₆)-Alkohole mit Alkan- und Cycloalkanketten in Anteilen von 0 bis 95 Gew.-%, bezogen auf den Anteil an Monohydroxyverbindungen, eingesetzt werden, beispielsweise Butanol, Hexanol, Cyclohexanol und/oder deren Mischungen.

Als monoveretherte Polyalkylenoxidverbindungen werden vorzugsweise Verbindungen der allgemeinen Formel XVI

R²⁹-(O-CHR³⁰-CHR³¹)ᵣ-OH Formel XVI

eingesetzt. In dieser Formel steht R²⁹ für einen Alkyl-, Cycloalkyl, oder Phenylrest, vorzugsweise für einen Alkylrest mit 1 bis 12, insbesondere 1 bis 4 Kohlenstoffatomen, R³⁰ und R³¹ stehen für Wasserstoff oder Alkylreste mit 1 bis 4 Kohlenstoffatomen und r bedeutet 1 bis 10, vorzugsweise 1 bis 4. Als Beispiele derartiger Verbindungen seien genannt: Methylglykol, Ethylglykol, Butylglykol, Methyldiglykol, Ethyldiglykol, Butyldiglykol, Methyltriglykol, Ethyltriglykol, Butyltriglykol, Methyltetraglykol, Ethyltetraglykol, Butyltetraglykol, Polyglykol-M-250 (MG: 260-275, OH-Zahl: 204-215), Polyglykol-M-350 (MG: 335-265, OH-Zahl: 154-167), Propylenglykolmethylether,Dipropylenglykolmethylether,Tripropylenglykolmethylether, Propylenglykol-n-butylether, Dipropylenglykol-n-butylether, Tripropylenglykol-n-butylether und Propylenglykolphenylether.

Die Herstellung der Polymere B erfolgt in an sich bekannter Weise durch Umsetzung von Epoxidgruppen enthaltenden Harzen mit Hydroxylverbindungen in Gegenwart von Katalysatoren, beispielsweise Lewis-Säuren (EP-A 0 272 595), Imidazolen (Macromulecules 1989 22, 99), cyclischen quartären Ammoniumverbindungen (US-A 5 019 639), Zinnverbindungen (EP-A 0 498 504) oder Erdalkaliperchloraten (Polymer Bulletin 1989, 22, S. 221-226).

Ein weiterer Gegenstand der Erfindung ist ein Verfahren zur Herstellung von Emulgator- und Lösungsmittel-freien multimodalen Kunstharz-Systemen, enthaltend Polymere A und B, dadurch gekennzeichnet, daß mindestens ein Aminogruppen-haltiges Polymer A und mindestens ein nichtionisches wasserverdünnbares Polymer B hergestellt wird und gegebenenfalls anschließend in Wasser neutralisiert oder teilneutralisiert wird, A und B vereinigt werden und gegebenenfalls ein wasserunlösliches Polymer C in Form von Latexteilchen hergestellt wird durch Emulsionspolymerisation von ethylenisch ungesättigten Verbindungen in Gegenwart der gegebenenfalls neutralisierten oder teilneutralisierten Polymere A und B.

In einer bevorzugten Verfahrensvariante wird das Aminogruppen-haltige Polymer A in Gegenwart von mindestens einem nichtionischen wasserverdünnbaren Polymer B hergestellt.

Als Neutralisationsmittel für die erfindungsgemäße Polymermischung aus A und B kommen sowohl organische Säuren, beispielsweise Ameisensäure, Dimethylolpropionsäure, Essigsäure, Glykolsäure, Gluconsäure, Hydroxyessigsäure, Propionsäure, Buttersäure, Milchsäure, Valeriansäure, Capronsäure, Önathsäure, Caprylsäure, Pelargonsäure, Caprinsäure, Laurinsäure, Myristinsäure, Palmitinsäure, und Stearinsäure, bevorzugt Ameisensäure, Essigsäure und Milchsäure, als auch anorganische Säuren, beispielsweise Phosphorsäure, Schwefelsäure, Borsäure und Chlorwasserstoffsäure in Frage. Der Neutralisationsgrad liegt im allgemeinen zwischen 5 und 120 %, vorzugsweise 10 und 90 %, bezogen auf die vorhandenden Aminogruppen.

Erfindungsgemäß enthalten die Kunstharzmischungen neben den Polymerharzen A und B optional auch Polymerharze C. Die Herstellung der Polymerharze C erfolgt über Emulsionspolymerisation in Gegenwart von Polymerharzen A und zumindest teilneutralisiertem Polymerharzen B. Die Harze A und B sollen in einer Menge vorhanden sein, die geeignet ist, um die erwünschten Emulgier- und Stabilisiereffekte herbeizuführen. Dabei sollte sowohl aus wirtschaftlichen Gründen als auch aus Gründen der Beeinflussung der anwendungstechnischen Eigenschaften, beispielsweise Wasserfestigkeit, Wiederanlösbarkeit und Trocknungsgeschwindigkeit, der herzustellenden Emulsionspolymerisate der Anteil der Harze A und B weder zu hoch noch zu gering sein. Es wird deshalb ein Gehalt an Polymeren A und B zusammen von 4 bis 40 Gew.-%, insbesondere 8 bis 20 Gew.-%, bezogen auf den Feststoffanteil der die Polymere A, B und C, enthaltenden Dispersion bevorzugt eingesetzt. Sehr gute Rheologie-kontrollierte Dispersionen (RC-Dispersionen) werden so auch noch erhalten, wenn weniger als 20 Gew.-%, vorzugsweise weniger als 15 Gew.-% der Summe der Harze A und B, bezogen auf die Summe von A, B und C, eingesetzt werden.

Verfahren zur Emulsionspolymerisation sind dem Fachmann bekannt. Üblicherweise zeichnen sie sich dadurch aus, daß in wäßriger Phase in Gegenwart von Radikalstartern und Emulgatoren, Schutzkolloiden oder anderen Stabilisatoren eine radikalische Polymerisation von ethylenisch ungesättigten Monomeren durchgeführt wird. Die genannten Komponenten können auf verschiedene Weise in die Emulsionspolymerisation eingebracht werden. Bei Verwendung der erfindungsgemäßen Polymerharze A in Emulsionspolymerisationen als Stabilisatoren kann aufgrund der guten Emulgierleistung dieser Polymeren auf die Gegenwart von niedermolekularen Tensiden und auf Schutzkolloide verzichtet werden. Die wäßrige Phase wird üblicherweise zum größten Teil vorgelegt, wobei eine anteilige Zugabe von Wasser während der Reaktion in Form einer Radikalstarterlösung oder Monomerpreemulsion möglich ist. Stabilisatoren können vollständig oder teilweise vorgelegt und der Rest während der Polymerisation zudosiert werden. Die Monomere können vollständig vorgelegt werden oder in reiner Form oder als Pre-Emulsion in Wasser zudosiert werden. Der Radikalstarter wird meistens teilweise vorgelegt und teilweise als wäßrige Lösung zudosiert. Als Vorlage wird die Mischung bezeichnet, die vor Einstellung der Reaktionstemperatur von üblicherweise 20 bis 99 °C in den Reaktor eingebracht wird. Die Polymerisation wird meistens durch thermische Zersetzung der Radikalstarter oder durch Redoxsysteme eingeleitet und kann als beendet angesehen werden, wenn der größte Teil der durch radikalische Kettenreaktion umsetzbaren Monomeren abreagiert ist (zwischen 20 und 99 °C). Üblicherweise bleiben bei diesem Verfahren zirka 0,001 bis 0,1 Gew.-% Restmonomere zurück. Weitere Verfahren bzw. Verfahrensvarianten werden beispielsweise in Ullmann, Enzyklopädie der technischen Chemie, 4. Auflage, Verlag Chemie, Weinheim (1980), Band 19, Seiten 132 ff. sowie in Encyclopedia of Polymerscience and Engineering, Volume 6, Wiley & Sons, New York 1986, Seiten 1-51, ausführlich geschildert.

Das Polymer C der Dispersion wird durch Monomere erzeugt, die wenigstens zu einem erheblichen Teil in Wasser schwerlöslich sind und auch bei Änderung des pH-Wertes schwerlöslich bleiben. Unter schwerlöslich wird eine Löslichkeit von weniger als 10 Gew.-%, insbesondere weniger als 5 Gew.-% bei 25 °C verstanden. Der Anteil der schwerlöslichen Monomeren muß wenigstens so groß sein, daß das entstehende Emulsionspolymerisat unter den Polymerisationsbedingungen in der Wasserphase unlöslich ist und in Form dispergierter Teilchen vorliegt. Im Sinne der Erfindung werden vorzugsweise solche Mischungen verwendet, die zu mindestens 70 Gew.-% und insbesondere zu mindestens 90 Gew.-% aus schwerlöslichen Monomeren bestehen.

Geeignete Monomere enthalten mindestens eine ethylenisch ungesättigte Gruppe. Die Begriffe ethylenisch ungesättigt, vinylisch ungesättigt und α,β-ungesättigt werden synonym verwendet. Dem Fachmann ist bekannt, daß derartige Monomere sich unter den Bedingungen der Emulsionspolymerisation in einem wäßrigen Medium zu Polymeren verbinden lassen. Dazu zählen beispielsweise Vinylverbindungen, Styrole und Acrylate sowie deren Derivate. Zu den geeigneten Vinylverbindungen zählen beispielsweise Vinylchlorid sowie Vinylester wie Vinylacetat, Vinylpropionat, Vinylester der Versaticsäure aber auch Vinylfettsäureester wie Vinyllaurat. Geeignete Styrolverbindungen sind Styrol, Vinyltoluol, α-Methylstyrol, Ethylstyrol, iso-Propylstyrol, tert.-Butylstyrol, 2,4-Dimethylstyrol, Diethylstyrol, o-Methyl-p-iso-propylstyrol, Halogenstyrole wie Chlorstyrol, Fluorstyrol und Jodstyrol, 2,4-Cyanostyrol, Hydroxystyrol, Nitrostyrol, Aminostyrol und/oder Phenylstyrol. Bevorzugt sind insbesondere Styrol, Vinyltoluol und α-Methylstyrol. Als geeignete Acrylate seien beispielhaft Acrylsäure-, Methacrylsäure- und Crotonsäure-Ester genannt, beispielsweise auch Ester die Hydroxyfunktionen enthalten, wie Hydroxyethylacrylat und Hydroxyethylmethacrylat. Bei der Emulsionspolymerisation können selbstverständlich auch Mischungen derartiger ethylenisch ungesättigter Monomere polymerisiert werden, soweit sie sich zur Copolymerisation eignen. Um Dispersionen mit Glasübergangstemperaturen von über 75 °C zu erhalten, wird bevorzugt von Styrol oder Styrolderivaten und/oder Methacrylaten ausgegangen.

Geeignete Initiatoren sind üblicherweise wasserlösliche radikalbildende Verbindungen, beispielsweise Wasserstoffperoxyd, Peressigsäure, Perbenzoesäure sowie Perdisulfate, beispielsweise Kalium- oder Ammoniumperoxodisulfat, Perphosphate, Per-oxycarbonate und Hydroperoxide, wie tert.-Butylhydroperoxid. Geeignete Redoxkatalysatorsysteme sind beispielsweise Natriumpersulfat/Natriumformaldehydsulfoxylat, Cumolhydroperoxid/Natriummetabisulfit, Wasserstoffperoxid/Ascorbinsäure und Schwefeldioxid/Ammoniumpersulfat. Geeignet sind auch Azo-Verbindungen, wie 4,4-Azo-bis-(cyanopentansäure). Die Initiatoren werden in üblichen katalytisch wirksamen Konzentrationen verwendet. Diese liegen im allgemeinen zwischen 0,01 bis 4,0 Gew.-%, bezogen auf die Dispersion.

In besonderen Ausführungsformen können weitere für die Emulsionspolymerisation übliche Komponenten verwendet werden. Dies sind beispielsweise Beschleuniger, Puffer und beliebige andere Bestandteile, die neben den erfindungsgemäßen Polymeren in der Emulsionspolymerisationsreaktionsmischung verwendet werden können und aus dem Stand der Technik zu Emulsionspolymerisationsverfahren bekannt sind.

Durch den multimodalen Aufbau der erfindungsgemäßen Kunstharz-Systeme gelingt es insbesondere, Bindemittel mit der für eine Anwendung im Druckbereich erforderlichen Trocknungsgeschwindigkeit, Wasserfestigkeit und hohen Benetzungsfähigkeit für Pigmente zu erhalten. Mit den erfindungsgemäßen Harzen (Polymere A und B) lassen sich Pigmentpasten und Glanzharzlösungen herstellen. Diese und die ebenfalls erfindungsgemäßen Dispersionen (Polymere A, B und C) weisen ein ausgezeichnetes drucktechnisches Verhalten, eine gute Lagerstabilität, Glanz und Farbstärke sowie eine hervorragende Deinkbarkeit auf. Gegenstand der Erfindung ist auch die Verwendung der erfindungsgemäßen Kunstharz-Systeme als Reibharze (Polymere A und B) und Anreibedispersionen (Polymere A, B und C) für Pigmentpasten und als Harze (Polymere A und B) und Dispersionen (Polymere A, B und C) als Hauptbindemittel für Drucklacke und Druckfarben auf Wasserbasis.

Bei der Verwendung der erfindungsgemäßen Kunstharz-Systeme als Harze in Wasserlacken dienen die Polymermischungen vorzugsweise als Komponenten zur Feineinstellung der wäßrigen Drucklacksystemen, beispielsweise in Glanzharzen (Polymere A und B) für Überdrucklacke zum Bedrucken von Papier, Pappe, Kartonagen und dergleichen, beispielsweise mit dem Farbwerk einer Bogen-oder Rollenoffsetmaschine, aus Feuchtwerken, separaten Lackieraggregaten von Bogen- oder Rollenoffset-Druckmaschinen, Bogenlackiermaschinen, Tief- und Flexodruckmaschinen. Bei der Verwendung der erfindungsgemäßen Harzlösungen (Polymere A und B) und Dispersionen (Polymere A, B und C) als Bindemittelträger für Drucklacke und Druckfarbe beträgt deren Feststoffgehalt im allgemeinen 20 bis 75 Gew.-%, vorzugsweise 30 bis 60 Gew.-%. Diese Lacke und Farben enthalten 1 bis 70 Gew.-% erfindungsgemäße Dispersionen und/oder 1 bis 40 Gew.-% erfindungsgemäße Festharze sowie 0 bis 60 Gew.-% Glykole oder Glykolether, 0 bis 30 Gew.-% Netzmittel, 0 bis 35 Gew.-% Neutralisationsmittel (Säuren), 0 bis 30 Gew.-% natürliche und/oder synthetische Wachse, 0 bis 2,5 Gew.-% Entschäumer, 0 bis 80 Gew.-% Wasser und 0 bis 60 Gew.-% Pimente. Das Pigment/Bindemittel-Verhältnis bei Anreibeoperationen beträgt zwischen 5 : 95 und 95 : 5, bevorzugt 30 : 70 bis 70 : 30. Für die Anwendung als Pigmentanreibekomponenten sind auch Festkörpergehalte von größer 30 Gew.-% zweckmäßig. Für den Aufbau dieser Stammfarben, Pigmente und Druckfarben sind auch Mischungen verschiedener Typen von Dispersionen oder Harzlösungen zweckmäßig. Zur Einarbeitung von Pigmenten (beispielsweise Titandioxid, Buntpigmente, synthetische Ruße), Füllstoffen (beispielsweise Talkum, Chinaclay, Wachse), Farbstoffen und Verlaufsmitteln in die Lösungen und/oder Dispersionen und/oder deren Mischungen und/oder deren Verdünnungen sind die allgemein üblichen Mahl-, Misch-, Knet- und Anreibegeräte optional in Gegenwart üblicher Dispergierhilfsmittel einsetzbar.

Die Pigmentpasten können im Prinzip alle für Druckverfahren geeigneten Pigmente enthalten, bevorzugt sind Pigmente mit Polyetherbelegung. Die Pigmentpasten können neben den Pigmenten auch noch übliche Zusätze, beispielsweise Weichmacher, Füllstoffe und Netzmittel enthalten.

Die Herstellung geeigneter, erfindungsgemäß verwendbarer Harze sowie die Herstellung stabiler Polymerdispersionen durch Emulsionspolymerisation sowie deren Verwendung in Druckfarben und Drucklacken wird durch nachfolgende Beispiele erläutert.

### Beispiele

Teile und Prozente in den Beispielen beziehen sich, soweit nicht anders angegeben, auf das Gewicht. Alle Reaktionen werden unter Schutzgas (N₂) durchgeführt.

### Beispiel 1: Epoxid/Epoxid-Amin - System

Handelsüblicher Polyglycidylether auf Basis Bisphenol A mit einem Epoxidäquivalent von ca. 180-192 (®Beckopox EP 140, Fa. Hoechst AG, 59 g) wird mit Methyltetraglycol (Mw 208, Siedebereich 280-350°C, 67 g) und handelsüblichem ®Anchor 1040 (Amin-Bortrifluorid-Addukte, Fa. Anchor, 250 mg) bei 150 °C gehalten. Sobald eine Epoxidzahl von < 4 erreicht ist, wird nacheinander handelsübliches ®Genamin SH 100 (Stearylamin, Fa. Hoechst AG, 27 g), Dimethylaminopropylamin (21 g) und handelsübliches Bisphenol A (95 g) zur Harzmasse gegeben und anschließend handelsüblicher Polyglycidylether auf Basis Bisphenol A mit einem Epoxidäquivalent von ca. 180-192 (Beckopox EP 140, 231 g) so langsam dosiert, daß keine Gelierung eintritt. Man erhält ein Kunstharzsystem mit einer Aminzahl von 50, einem M_{w} von 8500 und einem T_{g} von 46 °C.

### Beispiel 2:

Handelsüblicher Polyglycidylether auf Basis Bisphenol A mit einem Epoxidäquivalent von ca. 180-192 (Beckopox EP 140, 66 g) wird mit Methyltetraglykol (M_{w} 208, Siedebereich 280-350°C, 28 g), Butyldiglycol (29 g) und handelsüblichem Anchor 1040 (500 mg) bei 150 °C gehalten. Sobald eine Epoxidzahl von < 4 erreicht ist, wird nacheinander handelsübliches Bisphenol A (95 g), handelsübliches Genamin SH 100 (27 g), Dimethylaminopropylamin (21 g) zur Harzmasse gegeben und anschließend handelsüblicher Polyglycidylether auf Basis Bisphenol A mit einem Epoxidäquivalent von ca. 180-192 (Beckopox EP 140, 231 g) dosiert. Man erhält ein Kunstharzsystem mit einer Aminzahl von 64, einem M_{w} von 8700 und einem T_{g} von 48 °C.

### Beispiel 3:

Handelsüblicher Polyglycidylether auf Basis Bisphenol A mit einem Epoxidäquivalent von ca. 180-192 (Beckopox EP 140, 67 g) wird mit Methyltetraglykol (M_{w} 208, Siedebereich 280-350°C, 25 g), Butyldiglycol (31 g) und handelsüblichem Anchor 1040 (380 mg) bei 150 °C gehalten. Sobald eine Epoxidzahl von < 4 erreicht ist, wird nacheinander handelsübliches Bisphenol A (96 g), Cyclohexylamin (10 g), Dimethylaminopropylamin (22 g) zur Harzmasse gegeben und anschließend handelsüblicher Polyglycidylether auf Basis Bisphenol A mit einem Epoxidäquivalent von ca. 180-192 (Beckopox EP 140, 231 g) dosiert. Man erhält ein Kunstharzsystem mit einer Aminzahl von 74, einem M_{w} von 8800 und einem T_{g} von 67°C.

### Beispiel 4:

Das Kunstharzsystem aus Beispiel 1 (41 g) wird in der Hitze mit Milchsäure (90%ig, 3 g) und Wasser (81 g) direkt oder invers vermengt und mit weiterem Wasser (12 g) verdünnt. Man erhält so eine Anreibepaste mit einer Viskosität von 540 mPa·s (Ubbelohde), einem pH-Wert von 4,4 und einem Festkörpergehalt von 30 % (3 Std./100°C).

### Beispiel 5:

Das Kunstharzsystem aus Beispiel 2 (100 g) wird in der Hitze mit Milchsäure (90%ig, 10 g) und Wasser (60 g) direkt oder invers vermengt und mit weiterem Wasser (117 g) verdünnt. Man erhält so eine Glanzpaste mit einer Viskosität von 520 mPa·s (Ubbelohde), einem pH-Wert von 3,8 und einem Feststoffgehalt von 34 % (3 Std./100°C).

### Beispiel 6:

Eine Lösung des Kunstharzsystems aus Beispiel 1 (48 g) mit Milchsäure (90%ig, 3,3 g) in Wasser (95 g) wird auf 90 °C erhitzt. Nun wird über einen Zeitraum von 3-4 Stunden Styrol (391 g) und parallel dazu Ascorbinsäure (6 g) in Wasser (616 g) und tert.-Butylhydroperoxid (4 g) dosiert. Man erhält so, nach Filtration über 30 µm Filter, eine feinteilige Dispersion mit einem Festkörper von 35 % (3 Std., 100°C), einem pH-Wert von 3,7 und einer Viskosität (Ubbelohde) von 480 mPa·s.

### Beispiel 7:

Die Anreibepaste aus Beispiel 4 (40 g) wird mit ®Heliogen Blau D7099AQ (Blaupigment, Fa. Hoechst AG, 12 g) und Wasser (60 g) in einem allgemein üblichen Anreibegerät (Dispermat SL-C25, Fa. Getzmann) intensiv vermengt. Man erhält eine Pigment-Paste mit einem Festkörpergehalt von 36 % und einer Auslaufzeit von ca. 60 s im 4mm DIN-Becher bei 23 °C.

### Beispiel 8:

Die Glanzpaste aus Beispiel 5 (30 g) wird mit Dispersion aus Beispiel 6 (59 g) homogen gemischt. Nach Zugabe von Wasser (8 g) erhält man einen Überdrucklack mit einem Festkörpergehalt von 33 % und einer Auslaufzeit von ca. 60 s im 4mm DIN-Becher bei 23 °C.

### Beispiel 9:

Die Pigment-Paste aus Beispiel 7 (7 g) wird mit Dispersion aus Beispiel 6 (12 g) homogen gemischt. Man erhält so eine Druckfarbe mit einem Pigmentgehalt von ca. 7 % und einem Festkörper von ca. 35 %.

## Patentansprüche

1. Emulgator- und Lösemittel-freies multimodales Kunstharz-System, enthaltend mindestens ein Aminogruppen-haltiges Polymer A und mindestens ein nichtionisches wasserverdünnbares Polymer B sowie gegebenenfalls ein wasserunlösliches Polymer C in Form von Latexteilchen, herstellbar durch Emulsionspolymerisation von ethylenisch ungesättigten Verbindungen in Gegenwart der Polymere A und B.

2. Kunstharz-System nach Anspruch 1, dadurch gekennzeichnet, daß das Kunstharzsystem eine Glasübergangstemperatur von mindestens 25 °C aufweist.

3. Kunstharz-System nach Anspruch 1, dadurch gekennzeichnet, daß das Polymer A ein mittleres Molekulargewicht (Gewichtsmittel) von 3.000 bis 50.000 aufweist.

4. Kunstharz-System nach Anspruch 1, dadurch gekennzeichnet, daß das Polymer B ein mittleres Molekulargewicht (Gewichtsmittel) von 400 bis 5000 aufweist.

5. Kunstharz-System nach Anspruch 1, dadurch gekennzeichnet, daß das Gewichtsverhältnis der Polymere A zu den Polymeren B 95:5 bis 5:95 beträgt.

6. Verfahren zur Herstellung eines Kunstharz-Systems, dadurch gekennzeichnet, daß mindestens ein Aminogruppen-haltiges Polymer A und mindestens ein nichtionisches wasserverdünnbares Polymer B hergestellt wird und gegebenenfalls anschließend in Wasser neutralisiert oder teilneutralisiert wird, A und B vereinigt werden und gegebenenfalls ein wasserunlösliches Polymer C in Form von Latexteilchen hergestellt wird durch Emulsionspolymerisation von ethylenisch ungesättigten Verbindungen in Gegenwart der gegebenenfalls neutralisierten oder teilneutralisierten Polymere A und B.

7. Verfahren nach Anspruch 6, dadurch gekennzeichnet, daß das Polymer A in Gegenwart mindestens eines Polymers B hergestellt wird.

8. Verwendung des Kunstharz-Systems nach Anspruch 1 als Reibharz oder Anreibdispersion für Pigmentpasten.

9. Verwendung des Kunstharz-Systems nach Anspruch 1 als Harz oder Dispersion in Drucklacken und Druckfarben auf Wasserbasis.
